# EUROPEAN PATENT SPECIFICATION

(11) **EP 3 932 827 B1**
(45) Date of publication and mention of the grant of the patent: **07.09.2022**
(21) Application number: 20184098.0
(22) Date of filing: 03.07.2020
(51) Int. Cl.: B65D 85/68, B65D 65/08, B65D 67/02, F16C 29/00

(54) **PACKAGED LINEAR GUIDE ASSEMBLY**
VERPACKTE LINEARFÜHRUNGSEINHEIT
ENSEMBLE DE GUIDAGE LINÉAIRE EMBALLÉ

(43) Date of publication of application: 05.01.2022
(73) Proprietor: SNR Wälzlager GmbH, 40699 Erkrath (DE)
(72) Inventor: TEGELKAMP, Josef, 33719 Bielefeld (DE); LEINEWEBER, Sabine, 33719 Bielefeld (DE)
(74) Representative: Alatis

(56) References cited:
- TW-B- I 296 685
- US-A1- 2010 080 496
- US-A1- 2017 008 657

## Description

### TECHNICAL FIELD OF THE INVENTION

The invention relates to the packaging for handling, warehousing and shipping a linear guide assembly between its final assembly and the delivery to the customer.

### BACKGROUND ART

A linear guide assembly illustrated in US20100080496A1 comprises a rail and a carriage slidably engaged with the rail so as to be linearly movable relative to the rail in a longitudinal direction of the rail between two opposite ends of the rail. A stopper is attached to each end of the rail to prevent a linear movement of the carriage relative to the rail beyond the ends of the rail. Each stopper is described as an elongated C-shaped piece of steel, which extends in a width direction of the rail and is caught at both ends in ball rolling grooves of the rail. A stopper screw is used to fasten the stopper to the rail.

Document US2017/008657A1 discloses a linear guide assembly packaged in a blister package.

Usually, linear guides are packaged in plastic bags or sheets and secured with tapes or cable ties rolled over the plastic bag or sheets. The wrapping and unwrapping are time consuming.

### SUMMARY OF THE INVENTION

The invention aims to provide a faster packaging of linear guide assemblies, and to reduce waste and costs.

According to a first aspect of the invention, there is provided a packaged linear guide assembly comprising a rail and a carriage slidably engaged with the rail so as to be linearly movable relative to the rail in a longitudinal direction of the rail between two opposite ends of the rail, characterised in that at least a first elastically deformable clip made in one piece is elastically attached to the rail between the carriage and a first of the two opposite ends of the rail, so as to limit or prevent a linear movement of the carriage relative to the rail towards the first end of the rail.

The clip attached to the rail constitutes a stop, which can be easily attached to and detached from the rail, either directly or through a sheet of plastic or a bag. The clips can be collected and returned to the packaging facility after use to reduce waste and costs.

In one embodiment, the first clip has two opposite hooks elastically engaged in respective grooves, recesses, shoulders or edges of the rail. The design of the clip takes advantage of pre-existing grooves or edges on the rail. Preferably, the grooves, recesses, shoulders or edges have a profiled shape, i.e. their cross-section by a plane perpendicular to a longitudinal axis of the rail is constant. In a preferred embodiment, the grooves, recesses, shoulders or edges are located on two opposite sides of the rail. In one embodiment, the first clip has a flexible median portion linking the two opposite hooks. The flexible median portion of the clip enables a relative movement between the two opposite hooks, to facilitate the attachment to and detachment from the rail. The flexible median portion is preferably arched. Advantageously, the first clip has a protruding tab, protruding from one end of the flexible median portion. The protruding tab constitutes a lever for griping the clip and elastically deforming the median portion of the clip, which contributes to an easy handling of the clip.

The first clip is preferably made of plastics. Preferably, the first clip has a constant cross-section. The clip can be formed as an extruded profile, or moulded.

In one embodiment, the packaged linear guide assembly further comprises a second elastically deformable clip made in one piece elastically attached to the rail between the carriage and a second of the two opposite ends of the rail, so as to limit or prevent a linear movement of the carriage relative to the rail towards the second end of the rail.

In one embodiment, a sheet of plastics is wrapped over the rail and carriage, and the first clip is outside the sheet of plastics and attached to the rail through the sheet of plastics, as well as the second clip, if applicable. The clips are used both as stops to prevent motion of the carriage and as ties for tying the sheet of plastics.

According to another aspect of the invention, there is provided a method of packaging a linear guide assembly comprising a rail and a carriage slidably engaged with the rail so as to be linearly movable relative to the rail in a longitudinal direction of the rail between two opposite ends of the rail, characterised in that it comprises a step of elastically attaching at least a first elastically deformable clip made in one piece to the rail between the carriage and a first of the two opposite ends of the rail, so as to limit or prevent a linear movement of the carriage relative to the rail towards the first end of the rail.

In one embodiment, the method further comprises a step of elastically attaching a second elastically deformable clip made in one piece to the rail between the carriage and a second of the two opposite ends of the rail, so as to limit or prevent a linear movement of the carriage relative to the rail towards the second end of the rail.

The method may also comprise a step of wrapping a sheet of plastics over the rail and carriage, before attaching the first clip, and possibly the second clip, to the rail through the sheet of plastics and, an optional step of applying a lubricant to the linear guide assembly before attaching the first clip to the rail through the sheet of plastics.

### BRIEF DESCRIPTION OF THE FIGURES

Other advantages and features of the invention will then become more clearly apparent from the following description of a specific embodiment of the invention given as non-restrictive examples only and represented in the accompanying drawings in which:
- figure 1 is an isometric view of a packaged linear guide assembly according to an embodiment of the invention;
- figure 2 is a top view of the package linear guide assembly of figure 1.
- figure 3 is a front view of the packaged linear guide assembly of figure 1, which illustrates in particular a clip attached to a rail of the packed linear guide assembly;
- figure 4 is a front view of second embodiment of a clip for a packaged linear assembly according to the invention;
- figure 5 is a front view of third embodiment of a clip for a packaged linear assembly according to the invention;
- figure 6 is a front view of a fourth embodiment of a clip for a packaged linear assembly according to the invention.

Corresponding reference numerals refer to the same or corresponding parts in each of the figures.

### DETAILED DESCRIPTION OF A PREFERRED EMBODIMENT

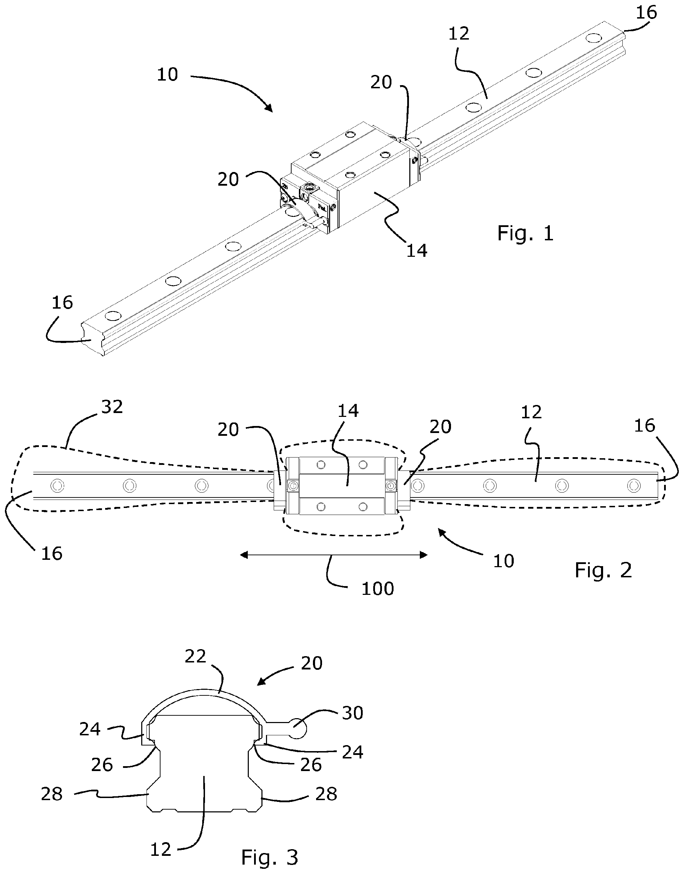

With reference to figures **1** to **3**, a linear guide assembly **10** comprises a rail **12** and a carriage **14** slidably engaged with the rail **12** so as to be linearly movable relative to the rail **12** in a longitudinal direction **100** of the rail between two opposite ends **16** of the rail **12**.

After assembly, such a linear guide assembly **10** needs to be conditioned for storage, shipping and delivery to the customer. In particular, the carriage **14** needs to be fixed to the rail **12**. To this end, two clips **20** are elastically attached to the rail **12**, each between the carriage **14** and a respective one of the two opposite ends **16** of the rail **12**, so as to limit or prevent a linear movement of the carriage **14** relative to the rail **12** towards the associated end **16** of the rail **12**.

The two clips **20** are identical and made in one piece of plastics, e.g from high-density polyethylene HDPE or low-density polyethylene LDPE. The clips **20** preferably have a constant cross-section so that they can be manufactured by extrusion or moulding.

Each clip **20** has a flexible medium portion **22** and two opposite end portions **24**, each of which protrudes at an angle relative to the medium portion so as to constitute a hook. The medium portion **22** is preferably arched. As illustrated in the figures, the hooks **24** can be elastically engaged in respective lateral grooves, recesses, shoulders or edges **26** of the rail, which extend longitudinally on two opposite sides 28 of the rail **12**.

Each clip **20** can be provided with a tab **30** that protrudes from one end of the medium portion **22**, so that the clip **20** can be more easily handled.

A sheet of plastics **32**, preferably a sleeve, can be wrapped over the linear guide assembly **10** before the hooks **24** of the clips **20** are engaged in the grooves **26** of the rail **12** through the sheet of plastics **32**. A lubricant can be applied to the linear guide assembly **10** before it is wrapped into the sheet of plastics **32**. In this case, the clips **20** engaged in the grooves **26** of the rail **12** through the sheet of plastics **32** also provide a sealing to avoid leakage of the lubricant through the sheet of plastics **32**.

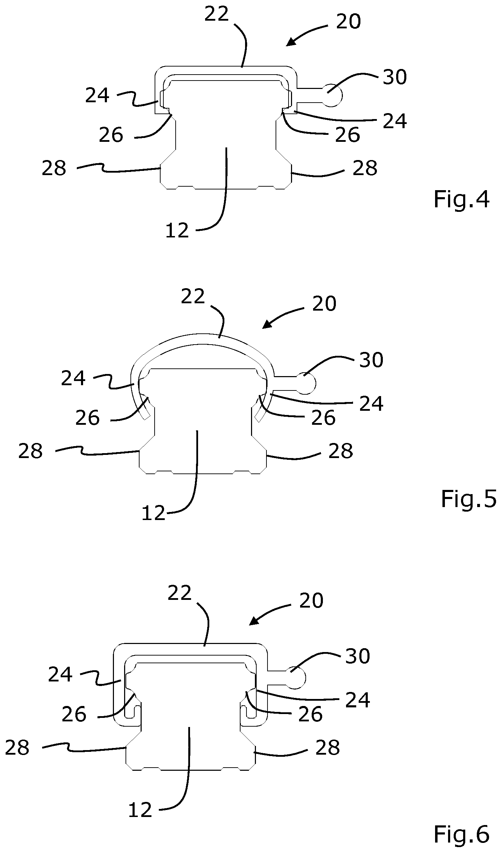

The shape of the clips **20** may vary, depending on the shape of the cross-section of the rail, as shown in figures **4** to **6**.

## Claims

1. A packaged linear guide assembly (10) comprising a rail (12) and a carriage (14) slidably engaged with the rail (12) so as to be linearly movable relative to the rail (12) in a longitudinal direction (100) of the rail between two opposite ends (16) of the rail (12), **characterised in that** at least a first elastically deformable clip (20) made in one piece is elastically attached to the rail (12) between the carriage (14) and a first of the two opposite ends (16) of the rail (12), so as to limit or prevent a linear movement of the carriage (14) relative to the rail (12) towards the first end (16) of the rail (12).

2. The packaged linear guide assembly (10) of claim 1, wherein the first clip (20) has two opposite hooks (24) elastically engaged in two respective grooves, recesses, shoulders or edges (26) of the rail (12).

3. The packaged linear guide assembly (10) of claim 2, wherein the two grooves, recesses, shoulders or edges (26) have a profiled shape.

4. The packaged linear guide assembly (10) of any one of the preceding claims, wherein the two grooves, recesses, shoulders or edges (26) are located on two opposite sides (28) of the rail (12).

5. The packaged linear guide assembly (10) of any one of claims 2 to 4, wherein the first clip (20) has a flexible median portion (22) linking the two opposite hooks (24).

6. The packaged linear guide assembly (10) of claim 5, wherein the flexible median portion (22) is arched.

7. The packaged linear guide assembly (10) of any one of claims 5 to 6, wherein the first clip (20) has at least one protruding tab (30), protruding from one end of the flexible median portion (22).

8. The packaged linear guide assembly (10) of any one of the preceding claims, wherein the first clip (20) is made of plastics.

9. The packaged linear guide assembly of any one of the preceding claims, wherein the first clip (20) has a constant cross-section.

10. The packaged linear guide assembly (10) of any one of the preceding claims, further comprising a second elastically deformable clip (20) made in one piece and elastically attached to the rail (12) between the carriage (14) and a second of the two opposite ends (16) of the rail (12), so as to limit or prevent a linear movement of the carriage (14) relative to the rail (12) towards the second end (16) of the rail (12).

11. The packaged linear guide assembly (10) of any one of the preceding claims, further comprising a sheet of plastics (32) wrapped over the rail (12) and carriage (14), wherein at least the first clip (20) is outside the sheet of plastics (32) and attached to the rail (12) through the sheet of plastics (32).

12. A method of packaging a linear guide assembly comprising a rail (12) and a carriage (14) slidably engaged with the rail (12) so as to be linearly movable relative to the rail (12) in a longitudinal direction (100) of the rail (12) between two opposite ends (16) of the rail (12), **characterised in that** it comprises a step of elastically attaching at least a first elastically deformable clip (20) made in one piece to the rail (12) between the carriage (14) and a first of the two opposite ends (16) of the rail (12), so as to limit or prevent a linear movement of the carriage (14) relative to the rail (12) towards the first end (16) of the rail (12).

13. The method of claim 12, wherein one or more of the following conditions are met:
- the first clip (20) has two opposite hooks (24) elastically engaged in two respective grooves, recesses, shoulders or edges (26), of the rail (12);
- the two grooves, recesses, shoulders or edges (26) have a profiled shape;
- the two grooves, recesses, shoulders or edges (26) are located on two opposite sides (28) of the rail (12);
- the first clip (20) as a flexible median portion (22) linking the two opposite hooks (24);
- the flexible median portion (22) is arched;
- the first clip (20) has at least one protruding tab (30), protruding from one end of the flexible median portion (22);
- the first clip (20) is made of plastics;
- the first clip (20) has a constant cross-section.

14. The method of claim 12, further comprising one or more of the following steps:
- a step of elastically attaching a second elastically deformable clip (20) made in one piece to the rail (12) between the carriage (14) and a second of the two opposite ends (16) of the rail (12), so as to limit or prevent a linear movement of the carriage (14) relative to the rail (12) towards the second end (16) of the rail (12);
- a step of wrapping a sheet of plastics (32) over the rail (10) and carriage (12), before attaching the first clip (20) to the rail (12) through the sheet of plastics (32);
- a step of applying a lubricant to the linear guide assembly (10) before attaching the first clip (20) to the rail (12) through the sheet of plastics (32).

## Patentansprüche

1. Verpackte Linearführungsanordnung (10), umfassend eine Schiene (12) und einen Schlitten (14), der mit der Schiene (12) verschiebbar in Eingriff steht, um relativ zu der Schiene (12) in einer Längsrichtung (100) der Schiene zwischen zwei gegenüberliegenden Enden (16) der Schiene (12) linear bewegbar zu sein, **dadurch gekennzeichnet, dass** wenigstens eine erste elastisch verformbare Klemme (20), die in einem Stück hergestellt ist, an der Schiene (12) zwischen dem Schlitten (14) und einem ersten der zwei gegenüberliegenden Enden (16) der Schiene (12) elastisch befestigt ist, um eine lineare Bewegung des Schlittens (14) relativ zu der Schiene (12) zu dem ersten Ende (16) der Schiene (12) hin zu begrenzen oder zu verhindern.

2. Verpackte Linearführungsanordnung (10) nach Anspruch 1, wobei die erste Klemme (20) zwei gegenüberliegende Haken (24) aufweist, die in zwei entsprechende Rillen, Aussparungen, Schultern oder Kanten (26) der Schiene (12) elastisch eingreifen.

3. Verpackte Linearführungsanordnung (10) nach Anspruch 2, wobei die zwei Rillen, Aussparungen, Schultern oder Kanten (26) eine Profilform aufweisen.

4. Verpackte Linearführungsanordnung (10) nach einem der vorhergehenden Ansprüche, wobei die zwei Rillen, Aussparungen, Schultern oder Kanten (26) auf zwei gegenüberliegenden Seiten (28) der Schiene (12) angeordnet sind.

5. Verpackte Linearführungsanordnung (10) nach einem der Ansprüche 2 bis 4, wobei die erste Klemme (20) einen flexiblen Mittelabschnitt (22) aufweist, der die zwei gegenüberliegenden Haken (24) verbindet.

6. Verpackte Linearführungsanordnung (10) nach Anspruch 5, wobei der flexible Mittelabschnitt (22) gewölbt ist.

7. Verpackte Linearführungsanordnung (10) nach einem der Ansprüche 5 bis 6, wobei die erste Klemme (20) wenigstens eine vorstehende Lasche (30) aufweist, die von einem Ende des flexiblen Mittelabschnitts (22) vorsteht.

8. Verpackte Linearführungsanordnung (10) nach einem der vorhergehenden Ansprüche, wobei die erste Klemme (20) aus Kunststoff hergestellt ist.

9. Verpackte Linearführungsanordnung nach einem der vorhergehenden Ansprüche, wobei die erste Klemme (20) einen konstanten Querschnitt aufweist.

10. Verpackte Linearführungsanordnung (10) nach einem der vorangehenden Ansprüche, ferner umfassend eine zweite elastisch verformbare Klemme (20), die in einem Stück hergestellt und an der Schiene (12) zwischen dem Schlitten (14) und einem zweiten der zwei gegenüberliegenden Enden (16) der Schiene (12) elastisch befestigt ist, um eine lineare Bewegung des Schlittens (14) relativ zu der Schiene (12) zu dem zweiten Ende (16) der Schiene (12) hin zu begrenzen oder zu verhindern.

11. Verpackte Linearführungsanordnung (10) nach einem der vorhergehenden Ansprüche, ferner umfassend eine Kunststofffolie (32), die über die Schiene (12) und den Schlitten (14) gewickelt ist, wobei sich wenigstens die erste Klemme (20) außerhalb der Kunststofffolie (32) befindet und an der Schiene (12) durch die Kunststofffolie (32) befestigt ist.

12. Verfahren zum Verpacken einer Linearführungsanordnung, umfassend eine Schiene (12) und einen Schlitten (14), der mit der Schiene (12) verschiebbar in Eingriff steht, um relativ zu der Schiene (12) in einer Längsrichtung (100) der Schiene linear zwischen zwei gegenüberliegenden Enden (16) der Schiene (12) bewegbar zu sein, **dadurch gekennzeichnet, dass** es einen Schritt des elastischen Befestigens wenigstens einer ersten elastisch verformbaren Klemme (20), die in einem Stück hergestellt ist, an der Schiene (12) zwischen dem Schlitten (14) und einem ersten der zwei gegenüberliegenden Enden (16) der Schiene (12) umfasst, um eine lineare Bewegung des Schlittens (14) relativ zu der Schiene (12) zu dem ersten Ende (16) der Schiene (12) hin zu begrenzen oder zu verhindern.

13. Verfahren nach Anspruch 12, wobei eine oder mehrere der folgenden Bedingungen erfüllt sind:
- die erste Klemme (20) weist zwei gegenüberliegende Haken (24) auf, die in zwei entsprechende Rillen, Aussparungen, Schultern oder Kanten (26) der Schiene (12) elastisch eingreifen;
- die zwei Rillen, Aussparungen, Schultern oder Kanten (26) weisen eine Profilform auf;
- die zwei Rillen, Aussparungen, Schultern oder Kanten (26) sind auf zwei gegenüberliegenden Seiten (28) der Schiene (12) angeordnet;
- die erste Klemme (20) weist einen flexiblen Mittelabschnitt (22) auf, der die zwei gegenüberliegenden Haken (24) verbindet;
- der flexible Mittelabschnitt (22) ist gewölbt;
- die erste Klemme (20) weist wenigstens eine vorstehende Lasche (30) auf, die von einem Ende des flexiblen Mittelabschnitts (22) vorsteht;
- die erste Klemme (20) ist aus Kunststoff hergestellt;
- die erste Klemme (20) weist einen konstanten Querschnitt auf.

14. Verfahren nach Anspruch 12, ferner umfassend einen oder mehrere der folgenden Schritte:
- einen Schritt des elastischen Befestigens einer zweiten elastisch verformbaren Klemme (20), die aus einem Stück hergestellt ist, an der Schiene (12) zwischen dem Schlitten (14) und einem zweiten der zwei gegenüberliegenden Enden (16) der Schiene (12), um eine lineare Bewegung des Schlittens (14) relativ zu der Schiene (12) zu dem zweiten Ende (16) der Schiene (12) hin zu begrenzen oder zu verhindern;
- einen Schritt des Wickelns einer Kunststofffolie (32) über die Schiene (10) und den Schlitten (12), bevor die erste Klemme (20) an der Schiene (12) durch die Kunststofffolie (32) befestigt wird;
- einen Schritt eines Aufbringens eines Schmiermittels auf die Linearführungsanordnung (10), bevor die erste Klemme (20) durch die Kunststofffolie (32) an der Schiene (12) befestigt wird.

## Revendications

1. Ensemble de guidage linéaire emballé (10) comprenant un rail (12) et un chariot (14) mis en prise de manière coulissante avec le rail (12) de manière à être mobile linéairement par rapport au rail (12) dans une direction longitudinale (100) du rail entre deux extrémités opposées (16) du rail (12), **caractérisé en ce qu'**au moins une première attache élastiquement déformable (20) faite d'une seule pièce est fixée élastiquement au rail (12) entre le chariot (14) et une première des deux extrémités opposées (16) du rail (12), de manière à limiter ou empêcher un déplacement linéaire du chariot (14) par rapport au rail (12) vers la première extrémité (16) du rail (12).

2. Ensemble de guidage linéaire emballé (10) selon la revendication 1, dans lequel la première attache (20) présente deux crochets opposés (24) mis en prise élastiquement dans deux rainures, évidements, épaulements ou bords (26) respectifs du rail (12).

3. Ensemble de guidage linéaire emballé (10) selon la revendication 2, dans lequel les deux rainures, évidements, épaulements ou bords (26) présentent une forme profilée.

4. Ensemble de guidage linéaire emballé (10) selon l'une quelconque des revendications précédentes, dans lequel les deux rainures, évidements, épaulements ou bords (26) sont situés sur deux côtés opposés (28) du rail (12).

5. Ensemble de guidage linéaire emballé (10) selon l'une quelconque des revendications 2 à 4, dans lequel la première attache (20) présente une partie médiane flexible (22) reliant les deux crochets opposés (24).

6. Ensemble de guidage linéaire emballé (10) selon la revendication 5, dans lequel la partie médiane flexible (22) est arquée.

7. Ensemble de guidage linéaire emballé (10) selon l'une quelconque des revendications 5 à 6, dans lequel la première attache (20) présente au moins une languette saillante (30), faisant saillie depuis une extrémité de la partie médiane flexible (22).

8. Ensemble de guidage linéaire emballé (10) selon l'une quelconque des revendications précédentes, dans lequel la première attache (20) est en plastique.

9. Ensemble de guidage linéaire emballé selon l'une quelconque des revendications précédentes, dans lequel la première attache (20) présente une section transversale constante.

10. Ensemble de guidage linéaire emballé (10) selon l'une quelconque des revendications précédentes, comprenant en outre une seconde attache élastiquement déformable (20) faite d'une seule pièce et fixée élastiquement au rail (12) entre le chariot (14) et une seconde des deux extrémités (16) opposées du rail (12), de manière à limiter ou empêcher un déplacement linéaire du chariot (14) par rapport au rail (12) vers la seconde extrémité (16) du rail (12).

11. Ensemble de guidage linéaire emballé (10) selon l'une quelconque des revendications précédentes, comprenant en outre une feuille de plastique (32) enveloppant le rail (12) et le chariot (14), dans lequel au moins la première attache (20) est à l'extérieur de la feuille de plastique (32) et fixée au rail (12) au travers de la feuille de plastique (32).

12. Procédé d'emballage d'un ensemble de guidage linéaire comprenant un rail (12) et un chariot (14) mis en prise de manière coulissante avec le rail (12) de manière à être mobile linéairement par rapport au rail (12) dans une direction longitudinale (100) du rail (12) entre deux extrémités opposées (16) du rail (12), **caractérisé en ce qu'**il comprend une étape de fixation élastique d'au moins une première attache élastiquement déformable (20) faite d'une seule pièce au rail (12) entre le chariot (14) et une première des deux extrémités opposées (16) du rail (12), de manière à limiter ou empêcher un déplacement linéaire du chariot (14) par rapport au rail (12) vers la première extrémité (16) du rail (12).

13. Procédé selon la revendication 12, dans lequel une ou plusieurs des conditions suivantes sont satisfaites :
- la première attache (20) présente deux crochets opposés (24) mis en prise élastiquement dans deux rainures, évidements, épaulements ou bords (26) respectifs du rail (12) ;
- les deux rainures, évidements, épaulements ou bords (26) présentent une forme profilée ;
- les deux rainures, évidements, épaulements ou bords (26) sont situés sur deux côtés opposés (28) du rail (12) ;
- la première attache (20) a une partie médiane flexible (22) reliant les deux crochets opposés (24) ;
- la partie médiane flexible (22) est arquée ;
- la première attache (20) présente au moins une languette saillante (30), faisant saillie depuis une extrémité de la partie médiane flexible (22) ;
- la première attache (20) est en plastique ;
- la première attache (20) présente une section transversale constante.

14. Procédé selon la revendication 12, comprenant en outre une ou plusieurs des étapes suivantes :
- une étape de fixation élastique d'une seconde attache élastiquement déformable (20) faite d'une seule pièce sur le rail (12) entre le chariot (14) et une seconde des deux extrémités opposées (16) du rail (12), de manière à limiter ou empêcher un déplacement linéaire du chariot (14) par rapport au rail (12) vers la seconde extrémité (16) du rail (12) ;
- une étape consistant à envelopper le rail (10) et le chariot (12) d'une feuille de plastique (32), avant de fixer la première attache (20) au rail (12) au travers de la feuille de plastique (32) ;
- une étape d'application d'un lubrifiant à l'ensemble de guidage linéaire (10) avant de fixer la première attache (20) au rail (12) au moyen de la feuille de plastique (32).
